# EUROPÄISCHE PATENTSCHRIFT

(11) **EP 0 381 980 B1**
(45) Veröffentlichungstag und Bekanntmachung des Hinweises auf die Patenterteilung: **07.04.1993**
(21) Anmeldenummer: 90101187.4
(22) Anmeldetag: 22.01.1990
(51) Int. Cl.: H02G 3/06

(54) **Vorrichtung zur Halterung und zum Durchführen von Kabeln, Leitungen, Rohren oder Schläuchen**
Device for the fixation and through-put cables, conduits, tubes or hoses
Dispositif de fixation et de traversée de câbles, conduites ou tuyaux

(30) Priorität: 04.02.1989 DE 3903354
(43) Veröffentlichungstag der Anmeldung: 16.08.1990
(73) Patentinhaber: Anton Hummel Verwaltungs-GmbH, D-79183 Waldkirch (DE)
(72) Erfinder: Gehring, Peter, D-7809 Simonswald-Griesbach (DE)
(74) Vertreter: Patent- und Rechtsanwaltssozietät, Schmitt, Maucher & Börjes

(56) Entgegenhaltungen:
- DE-A- 2 631 996
- DE-A- 3 109 583
- DE-U- 8 400 007

## Beschreibung

Die Erfindung betrifft eine Vorrichtung zur Halterung und zum Durchführen von Kabeln, Leitungen, Rohren oder Schläuchen, mit einer Schraubhülse, welche in axialer Fortsetzung des Gewindebereiches durch Axialschlitze voneinander getrennte Klemmfinger aufweist, die vorzugsweise einstückig an der Schraubhülse angeordnet sind, und mit einer Überwurfmutter mit Durchstecköffnung, die in ihrem Inneren eine sich verjüngende, vorzugsweise konische Druckfläche zur Beaufschlagung der Enden der Klemmfinger und zu deren radialer Verformung sowie eine Drehsicherung zum Verrasten mit einem oder mehreren der Klemmfinger hat.

Eine derartige Verschraubung ist bereits aus der DE-PS 26 31 996 bekannt und wird beispielsweise als Kabelverschraubung zur vibrationsfesten Montage von Kabeln bei Geräten, Maschinen, Baugruppen oder dgl. verwendet.
Dabei wird etwa ein Kabel durch die Schraubhülse und die Durchstecköffnung der Überwurfmutter hindurchgeführt und durch Festdrehen der Überwurfmutter auf der Schraubhülse mit Hilfe der dabei etwa radial nach innen gedrückten Klemmfinger dort in seiner Lage fixiert. Während des Aufschraubens der Überwurfmutter auf die Schraubhülse lenken mehrere, im axialen Längsschnitt der Vorrichtung mit ihrer Zahnbasis schräg angeordnete und als Schrägverzahnung bzw. Drehsicherung dienende Rastzähne die einzelnen Klemmfinger jeweils so aus, daß die für die Verrastung wirksamen Zahnflanken oder Sperrflanken der Rastzähne ihren Platz zwischen den Klemmfingern finden.

Bei dieser vorbekannten Vorrichtung ist die wirksame Zahnflanke genau radial zur Durchstecköffnung der Überwurfmutter ausgerichtet, wie dies ähnlich auch bei den Verriegelungszähnen von Sperrzahnschrauben und Sperrzahnmuttern üblich ist. Da jedoch der Querschnitt der Schlitze zwischen den Klemmfingern schräg angeordnet ist, ergibt sich beim Aufschrauben der Überwurfmutter auf die Schraubhülse zwischen den Klemmfingern und den Rastzähnen jeweils nur eine Punktberührung und somit eine verhältnismäßig unzureichende Verrastung, die oft auch bei nur vergleichsweise geringen, auf sie einwirkenden Kräften wieder ausrastbar ist.

Es besteht daher die Aufgabe, eine Vorrichtung der eingangs erwähnten Art zu schaffen, die nicht nur lediglich zu einer eventuell auch ungewollt leicht lösbaren Verrastung der Kabelverschraubung oder dgl. führt, sondern bei der die Sperrung zwischen ihrer Überwurfmutter und der Schraubhülse bereits bei der Herstellung den jeweiligen Anforderungen und Belastungen angepaßt werden kann und entsprechend vorwählbar ist. Dabei soll der Konstruktions- und Herstellungsaufwand für die einzelnen Teile der Vorrichtung möglichst nicht oder nicht wesentlich größer sein.

Die erfindungsgemäße Lösung dieser Aufgabe besteht bei der Vorrichtung der eingangs erwähnten Art insbesondere darin, daß im Inneren der Überwurfmutter als Drehsicherung wenigstens ein Rastzahn vorgesehen ist, der über die Druckfläche ragt und eine Sperrflanke zum Einrasten zwischen zwei durch im Querschnitt schräge Axialschlitze voneinander getrennten Klemmfingern hat, daß diese Sperrflanke schräg zu einem in ihrem Bereich verlaufenden und sie somit schneidenden Radius der Durchstecköffnung angeordnet ist, und daß sie in Gebrauchsstellung zur gleichen Dreh- oder Umfangsrichtung hin wie die Axialschlitze der Schraubhülse schräg verläuft. Durch diese, auch im Querschnitt der Vorrichtung schräge Anordnung der Sperrflanken der Rastzähne wird erreicht, daß nach Durchführung der Verschraubung die Sperrflanke eines Rastzahnes über seine Länge größtenteils in Wirkverbindung und Berührung mit dem jeweils hintergriffenen Klemmfinger der Schraubhülse kommt und somit eine echte und wirksame Sperrung gegen eine Lösebewegung bewirkt.

Eine andere vorteilhafte Weiterbildung der eingangs erwähnten Vorrichtung, für die selbstständiger Schutz beansprucht wird, sieht erfindungsgemäß vor, daß an der Druckfläche im Inneren der Überwurfmutter als Drehsicherung zumindest eine Rastrille mit einer Sperrflanke zum Einrasten eines Klemmfingers vorgesehen ist. Eine solche Ausführung, die statt Rastzähnen radial oder auch schräg verlaufende Rastrillen aufweist, läßt sich einfach und mit geringem Aufwand herstellen.

Dabei ist es vorteilhaft, wenn auch hier die die Klemmfinger voneinander trennende Axialschlitze schräg verlaufen, wenn die Sperrflanke jeder Rastrille schräg zu einem in ihrem Bereich verlaufenden und sie somit schneidenden Radius der Durchstecköffnung angeordnet ist, und wenn sie in Gebrauchsstellung zur gleichen Dreh- oder Umfangsrichtung hin wie die Axialschlitze der Schraubhülse schräg verläuft. Auch diese Ausführung der erfindungsgemäßen Vorrichtung ermöglicht eine gute und bei der Herstellung auch vorwählbare Sperrung oder Losdrehsicherung zwischen Überwurfmutter und Schraubhülse.
Dabei werden beim Aufschrauben der Überwurfmutter einzelne der durch schräge Axialschlitze voneinander getrennten Klemmfinger der Schraubhülse nach außen gedrückt und können somit leicht in jeweils eine entsprechende Rastrille eingreifen.

Eine feste Sicherung der Verschraubung der Schraubhülse mit der auf sie aufgeschraubten Überwurfmutter ist zu erreichen, wenn die Axialschlitze der Schraubhülse und die Sperrflanken der an der Überwurfmutter vorgesehenen Rastzähne oder Rastrillen in Gebrauchsstellung jeweils etwa denselben Neigungswinkel gegenüber dem sie schneidenden Radius der Durchstecköffnung aufweisen. Wenn beispielsweise die Querschnitte der Axialschlitze zwischen den Klemmfingern und die Sperrflanken der an der Überwurfmutter vorgesehenen Rastzähne in Gebrauchsstellung jeweils etwa denselben Neigungswinkel gegenüber dem sie schneidenden Radius der Durchstecköffnung aufweisen, kommt die Sperrflanke praktisch über die gesamte Länge in Wirkverbindung mit dem von ihr hintergriffenen Klemmfinger. Bei einer Ausführung, die statt Rastzähnen eine oder mehrere Rstrillen aufweist, hat jede Sperrflanke ebenfalls denselben Neigungswinkel wie die die Axialschlitze begrenzenden schmalseitigen Randbereiche der Klemmfinger. Entsprechend gut können die Klemmfinger mit diesem Randbereich in die Rastrillen beim Aufschrauben der Überwurfmutter auf die Schraubhülse einrasten.

Je nach dem, ob die Überwurfmutter eventuell noch des öfteren von der Schraubhülse auch wieder abgeschraubt werden muß, ist es vorteilhaft, wenn die Sperrung zwischen der Überwurfmutter und der Schraubhülse bei der Herstellung an diese Anforderungen angepaßt werden kann.

Zweckmäßigerweise weicht dazu der von der Sperrflanke und dem sie an ihrem inneren radialen Ende schneidenden Radius eingeschlossene spitze Winkel von dem spitzen Winkel ab, den die Axialschlitze und die sie ebenfalls jeweils an ihren inneren radialen Randbereichen schneidenden Radien bei unverformten Klemmfingern einschließen.

Nach einem weiteren, besonders vorteilhaften Vorschlag gemäß der Erfindung, ist der von der Sperrflanke und dem sie an ihrem inneren radialen Ende schneidenden Radius eingeschlossene spitze Winkel vorzugsweise etwas größer als der von den Axialschlitzen und den diese ebenfalls jeweils an ihren inneren radialen Endbereichen schneidenden Radien eingeschlossene spitze Winkel bei unverformten Klemmfingern.
Durch die Wirkverbindung beispielsweise des Rastzahnes mit dem von ihm jeweils hintergriffenen Klemmfinger wird dieser unter dem Druck des Rastzahnes in Umfangs- oder Drehrichtung verformt, also schräg gestellt. Ist die Schrägung des Winkels der Sperrflanke etwas stärker als die des unverformten Klemmfingers, so tritt die volle Wirkverbindung zwischen der Sperrflanke und dem von ihr hintergriffenen Klemmfinger gerade auch bei einer verstärkten Belastung der Verschraubung auf, um sich dann in vorteilhafter Weise im Sinne einer starken Sperrung auszuwirken.

Sollte aus irgendwelchen Gründen (z. B. öftere Demontage) eine schwächere Sperrung gewünscht werden, so ist es zweckmäßig, wenn der von der Sperrflanke und dem sie an ihrem inneren radialen Ende schneidenden Radius eingeschlossene Winkel vorzugsweise etwas kleiner ist als der von den Axialschlitzen und den diese ebenfalls jeweils an ihren inneren radialen Endbereichen schneidenden Radien eingeschlossene Winkel bei unverformten Klemmfingern.

Durch die geringfügig schwächere Ausführung des Winkels kann gleichzeitig auch eine entsprechend schwächere Sperrung gezielt erreicht werden.

Zweckmäßigerweise sind mehrere Rastzähne oder Rastrillen vorgesehen.
Dabei sieht eine wichtige Ausgestaltung gemäß der Erfindung vor, daß die Sperrflanken der Rastzähne oder Rastrillen mit dem sie an ihrem inneren radialen Ende jeweils schneidenden Radius vorzugsweise unterschiedliche Winkel einschließen. Somit kann zumindest einer dieser Rastzähne bei Belastung der Verschraubung je nach der Verformung der Klemmfinger bestmöglich an diesen angreifen.

Vorteilhaft ist es, wenn die Höhe der Sperrflanke sich über deren Länge ändert, so daß eine Anpassung an die radiale Verformung und auch an die äußere Kontur der Klemmfinger möglich ist. Da in aller Regel eine radiale Verformung der Klemmfinger nach innen erfolgt, ist es vorteilhaft, wenn die Höhe der Sperrflanke eines Rastzahnes oder einer Rastrille vom größeren zum kleineren Durchmesser der Druckfläche hin zunimmt.

Eine weitere vorteilhafte Ausführung gemäß der Erfindung sieht vor, daß die Sperrflanke der Rastzähne von der Zahnspitze bis zur Zahnbasis eine Hinterschneidung hat. Dadurch kann sie sich unter Belastung regelrecht mit dem erfaßten Klemmfinger verkrallen und formschlüssig verbinden und somit eine radiale Ausweichbewegung dieses Klemmfingers aus dem Bereich des Rastzahnes heraus noch besser verhindern.

Um eine Beschädigung der Klemmfingerkanten bei mehrfacher Öffnung der Sperrung weitgehend zu vermeiden, ist es zweckmäßig, wenn die Sperrflanke und die gegenüberliegende Zahnflanke jedes Rastzahnes von der Zahnbasis zur Zahnspitze hin aufeinander zulaufen. Bei entsprechender Höhe der Rastzähne läßt sich dennoch eine gute Sperrung zwischen der Schraubhülse und der auf ihr aufgeschraubten Überwurfmutter erzielen. Durch die gegenläufige, von der Zahnspitze bis zur Zahnbasis positive Abschrägung der Zahnflanken werden Beschädigungen der Klemmfingerkanten auch nach mehrmaliger Demontage der erfindungsgemäßen Vorrichtung weitgehend vermieden.
Bei entsprechender Ausgestaltung der Rastrillen lassen sich die genannten Vorteile auch bei derartigen Ausführungsformen erreichen.

Um eine möglichst gute Funktion der erfindungsgemäßen Vorrichtung bei vergleichsweise geringem Herstellungsaufwand zu gewähleisten, ist es zweckmäßig, wenn die Schraubhülse und/oder die Überwurfmutter im wesentlichen aus einem elastischen Werkstoff, insbesondere aus Kunststoff bestehen.

Weiterbildungen der Erfindung sind in weiteren Unteransprüchen aufgeführt. Nachstehend wir diese anhand vorteilhafter Ausführungsbeispiele in Verbindung mit den Figuren noch näher erläutert.

Es zeigt:
- Fig. 1: eine, zu einer Kabel- oder dgl. Verschraubung gehörende Schraubhülse in einem axialen Längsschnitt,
- Fig. 2: die Schraubhülse aus Fig. 1 in einer Draufsicht auf ihre Klemmfinger,
- Fig. 3: eine auf die Schraubhülse aus Fig. 1 und 2 aufschraubbare Überwurfmutter mit Durchstecköffnung, ebenfalls in einem axialen Längsschnitt,
- Fig. 4: die Überwurfmutter aus Fig. 3 in einer Draufsicht in Blickrichtung "X" aus Fig. 3,
- Fig. 5: die Überwurfmutter aus Fig. 3 und 4 im Bereich eines ihrer Rastzähne in einem Teil-Querschnitt in Schnittebene A-A aus Fig. 4,
- Fig. 6: in einem Teil-Querschnitt den Rastzahn einer gegenüber Fig. 5 geringfügig abgewandelten Überwurfmutter ,wobei die Sperrflanke und die gegenüberliegende Zahnflanke des Rastzahnes von der Zahnbasis zur Zahnspitze hin aufeinander zulaufen,
- Fig. 7: in einem Teil-Querschnitt eine entsprechend dem Rastzahn in Fig. 5 ausgebildete Rastrille, deren Sperrflanke ebenfalls eine Hinterschneidung bildet und
- Fig. 8: eine entsprechend dem Rastzahn in Fig. 6 ausgebildete Rastrille in einem Teil-Querschnitt, wobei die Sperrflanke und die gegenüberliegende Flanke dieser Rastrille von ihren außenseitigen Längsrändern zum Rillengrund hin aufeinander zulaufen.

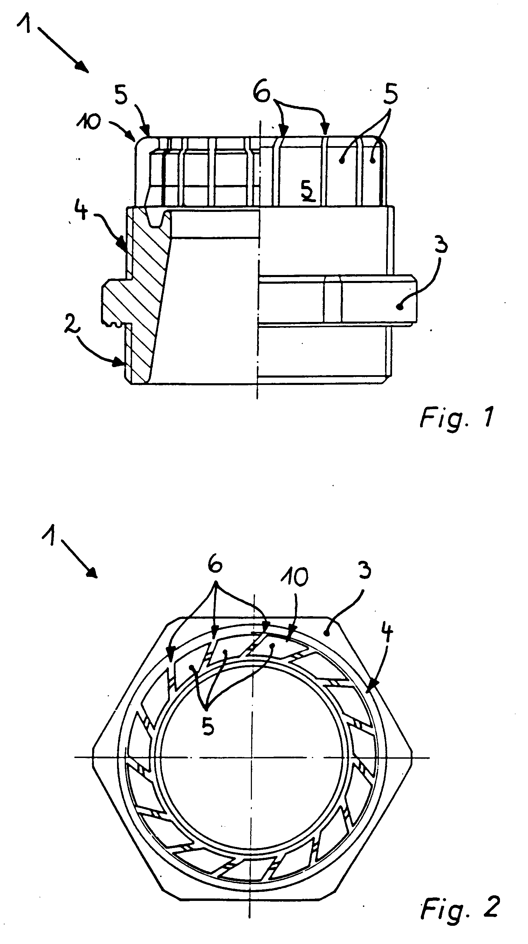

Fig. 1 zeigt eine hohlzylindrische Schraubhülse 1 einer - hier nicht weiter dargestellten - Vorrichtung zur Halterung und zum Durchführen von Kabeln, Leitungen, Rohren oder Schläuchen in einem axialen Längsschnitt.
Die Schraubhülse 1 ist mit einem Anschlußgewinde 2 bis zu einem Sechskant-Bund 3 in eine entsprechende Aussparung etwa eines Gerätes oder einer Maschine einsetzbar. Auf der dem Anschlußgewinde 2 gegenüberliegenden Seite des Sechskant-Bundes 3 weist die Schraubhülse 1 ein Aufnahmegewinde 4 sowie in axialer Fortsetzung des Aufnahmegewindes 4 stirnseitig eine Vielzahl von Klemmfingern 5 auf, die durch - wie Fig. 2 zeigt - im Querschnitt schräge Axialschlitze 6 voneinander getrennt sind. Dabei sind die Klemmfinger 5 einstückig mit der aus hartelastischem Kunststoff bestehenden Schraubhülse 1 verbunden. Durch die schräge Anordnung der sie voneinander trennenden Axialschlitze 6 können sich die Klemmfinger 5 bei einer radialen Verformung nach innen gut aneinander anlegen.

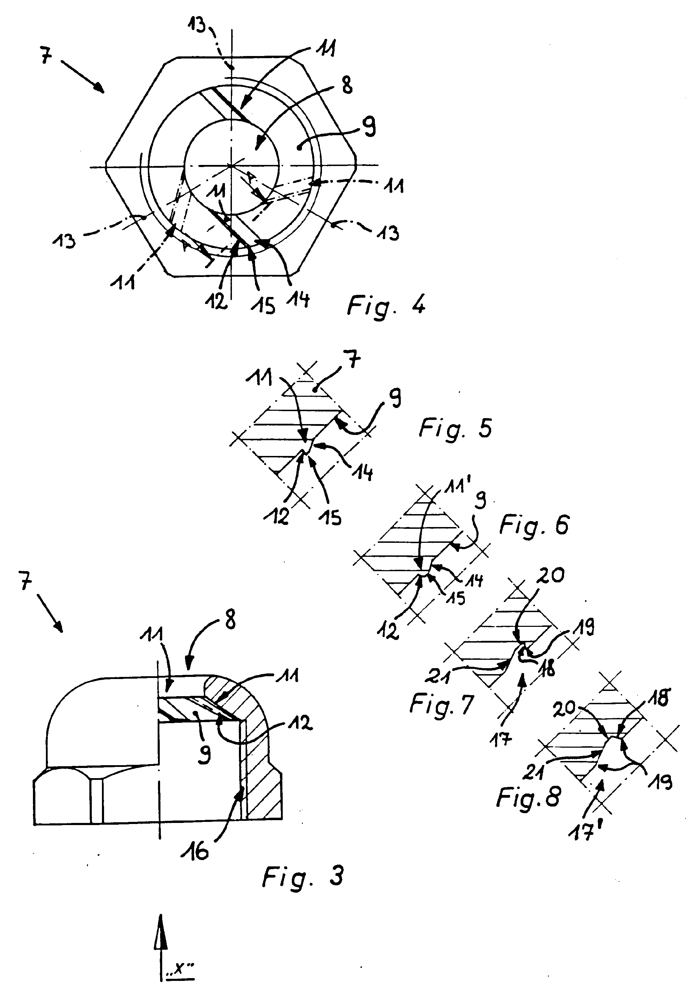

Auf das Aufnahmegewinde 4 der Schraubhülse 1 ist eine, in Fig. 3 u.4 dargestellte Überwurfmutter 7 mit Durchstecköffnung 8 aufschraubbar. Die Überwurfmutter 7 ist ähnlich einer Hutmutter geformt und weist in ihrem Inneren eine sich verjüngende und hier konisch ausgebildete Druckfläche 9 auf, mit der sie beim Aufschrauben auf die Schraubhülse 1 die freien Endbereiche 10 der Klemmfinger 5 beaufschlagt und zunehmend radial nach innen verformt.

Die im wesentlichen aus der Schraubhülse 1 sowie der Überwurfmutter 7 bestehende Vorrichtung kann beispielsweise als Kabelverschraubung zur vibrationsfesten Montage von Kabeln bei Geräten, Maschinen, Baugruppen od.dgl. verwendet werden.

Ist beispielsweise ein Kabel, ein Schlauch od.dgl. durch die Schraubhülse 1 und die Durchstecköffnung 8 der Überwurfmutter 7 hindurchgeführt, so bewegen sich die Klemmfinger 5 beim Aufschrauben der Überwurfmutter 7 auf die Schraubhülse 1 gegen dieses Kabel, diesen Schlauch od.dgl. und fixieren diesen Gegenstand dort in seiner Lage. Dadurch kann ein Kabel auch von einem unbeabsichtigten, übermäßigen Zug entlastet werden.

Als Losdrehsicherung der mit der Schraubhülse 1 verbundenen Überwurfmutter 7 weist diese an ihrer Druckfläche 9 gegenüber der Druckfläche 9 zumindest einen vorspringenden Rastzahn 11 mit einer Sperrflanke 12 auf, wobei der Rastzahn beim Aufschrauben der Überwurfmutter 7 auf die Schraubhülse 1 zwischen zwei Klemmfingern 5 einrastbar ist. Möglich ist aber auch, daß die Überwurfmutter 7 an ihrer Druckfläche 9 statt eines Rastzahnes 11 zumindest eine gegenüber der Druckfläche 9 zurückliegende Rastrille 17, 17′ (vgl. Fig. 7, 8) hat, in die ein Klemmfinger mit seinem Kantenbereich einrastbar ist.

Um möglichst eine echte Sperrung der mit ihrem Innengewinde 16 auf die Schraubhülse 1 aufgeschraubten Überwurfmutter 7 zu ermöglichen, ist erfindungsgemäß vorgesehen, daß die Sperrflanke 12 - wie in Fig. 3 u. 4 gut erkennbar ist - schräg zu einem in ihrem Bereich verlaufenden und sie somit schneidenden Radius 13 der Durchstecköffnung 8 angeodnet ist. Vergleicht man beispielsweise die in Fig. 2 dargestellte Schraubhülse 1 mit der in Fig. 4 gezeigten Überwurfmutter 7, so wird deutlich, daß die Sperrflanken 12 der Rastzähne 11 in Gebrauchsstellung der Vorrichtung zur gleichen Umfangsrichtung hin wie die Axialschlitze 6 der Schraubhülse 1 schräg verlaufen. Zweckmäßigerweise stehen die Sperrflanken 12 der Rastzähne 11 gegenüber dem Radius etwa unter demselben Winkel schräg, wie der Querschnitt der zwischen den Klemmfingern 5 vorgesehenen Axialschlitze 6 quersteht. Auf diese Weise wird nach der Verschraubung der Überwurfmutter 7 mit der Schraubhülse 1 erreicht, daß die Sperrflanken 12 der Rastzähne 11 jeweils praktisch über ihre gesamte Länge in Wirkverbindung und Berührung mit dem von ihnen jeweils hintergriffenen Klemmfinger 5 kommen und somit eine echte und wirksame Sperrung gegen eine Lösebewegung bewirken.

Die Sperrflanken 12 können auf der Druckfläche 9 der Überwurfmutter 7 jedoch auch so angeordnet werden, daß die Schrägung des Winkels einer der Sperrflanken 12 etwas stärker ist als die des unverformten Klemmfingers 5 bzw. der zwischen den Klemmfingern 5 vorgesehenen Axialschlitze 6. Da sich der Klemmfinger 5 bei einem Öffnungsversuch der Vorrichtung unter dem Druck des Rastzahnes 11 in Umfangsrichtung verformt, also schräggestellt wird, wird bei dieser Ausführungsform die volle Wirkverbindung und Wirksamkeit der Losdrehsicherung in vorteilhafter Weise gerade bei einer verstärkten Belastung erreicht.

In Fig. 4 ist angedeutet, daß auf der Druckfläche 9 auch mehrere Rastzähne 11 mit Sperrflanken 12 vorgesehen sein können. Bei mehreren Rastzähnen 11 kann es zweckmäßig sein, deren Winkelstellung jeweils verschieden auszubilden, damit mindestens einer der Sperrflanken 12 je nach Belastung und Verformung der Klemmfinger 5 an diesen bestmöglich angreifen kann.

Aus dem in Fig. 3 dargestellten Teil-Längsschnitt wird deutlich, daß die Höhe der Sperrflanken 12 sich über deren Länge ändert und vom größeren zum kleineren Durchmesser der Druckfläche 9 hin zunimmt. Somit sind die Sperrflanken 12 an die radiale und nach innen gerichtete Verformung der Klemmfinger 5 sowie an deren äußere Kontur weitestgehend angepaßt.

In Fig. 5 ist die Überwurfmutter 7 aus Fig.3 u.4 im Bereich eines ihrer Rastzähne 11 in einem Teil-Querschnitt in Schnittebene A - A aus Fig.4 dargestellt. Wie Fig.5 zeigt, sind die Rastzähne 11 im Querschnitt etwa sägezahnförmig ausgebildet mit einer gegenüber der Druckfläche 9 flacheren Zahnflanke 14 und der demgegenüber steileren Sperrflanke 12. Dabei ist die Zahnspitze abgeflacht und verläuft etwa parallel zur Druckfläche 9. Bei näherer Betrachtung wird deutlich, daß die Sperrflanke 12 von der Zahnspitze 15 bis zum Zahngrund eine Hinterschneidung hat, durch die sie sich unter Belastung regelrecht mit dem von ihr erfaßten Klemmfinger 5 verkrallen und formschlüssig verbinden kann, wodurch eine radiale Ausweichbewegung dieses Klemmfingers 5 aus dem Bereich des entsprechenden Rastzahnes 11 heraus noch besser verhindert wird.

In Fig. 6 ist in einem Teil-Querschnitt ein gegenüber der Druckfläche 9 vorspringender Rastzahn 11′ dargestellt, dessen Sperrflanke 12 und die der Sperrflanke 12 gegenüberliegende Zahnflanke 14 von der Zahnbasis zur Zahnspitze 15 hin aufeinander zulaufen. Bei dieser Ausführungsform wird auch bei mehrfachem Öffnen der auf die Schraubhülse 1 aufgeschraubten Überwurfmutter 7 und ihrer Drehsicherung eine Beschädigung der die Axialschlitze 6 begrenzenden Klemmfingerkanten weitgehend vermieden. Durch entsprechende Ausbildung der Schrägungswinkel und/oder durch eine gegenüber dem in Fig. 5 dargestellten Rastzahn größere Höhe von der Zahnbasis zur Zahnspitze des Rastzahnes 11′ läßt sich dennoch auch bei dieser Ausführungsform eine gute Sperrung zwischen Überwurfmutter und Schraubhülse erreichen.
Wie Fig. 6 zeigt, ist auch die Zahnflanke 14 des Rastzahnes 11′ gegenüber dessen Sperrflanke 12 flacher abgeschrägt.

Die Merkmale und die mit den Merkmalen verbundenen Vorteile der Rastzähne 11, 11′ lassen sich sinngemäß weitgehend auch auf solche Rastrillen übertragen, die als Drehsicherung zum Einrasten der Kantenbereiche der Klemmfinger 5 einer Schraubhülse 1 dienen und gegenüber der Druckfläche 9 der Überwurfmutter 7 zurückliegen.
In Fig. 7 ist in einem Teil-Querschnitt eine Rastrille 17 abgebildet, die als Drehsicherung zum Einrasten eines Klemmfingers 5 der Schraubhülse 1 dient und gegenüber der Druckfläche 9 zurückliegt. Die Rastrille 17 in Fig. 7 ist sinngemäß wie der in Fig. 5 dargestellte Rastzahn 11 ausgebildet. So zeigt Fig. 7, daß die Sperrflanke 18 der Rastrille 17 von ihrem außenseitigen Längsrand 19 zum Rillengrund 20 hin eine Hinterschneidung bildet. Dabei ist die der Sperrflanke 18 gegenüberliegende Flanke 21 zur Sperrflanke 18 hin etwas flacher abgeschrägt.

In Fig. 8 ist eine Rastrille 17′ in einem Teil-Querschnitt dargestellt, deren Flanken - ähnlich wie die Sperrflanke und die Zahnflanke des in Fig. 6 dargestellten Rastzahnes 11′ - von ihren außenseitigen Längsrändern 19 zum Rillengrund 20 hin aufeinander zulaufen. Auch mit Hilfe der Rastrille 17′ kann die Sperrung zwischen der Schraubhülse 1 und der auf sie aufgeschraubten Überwurfmutter 7 mehrfach gelöst und geöffnet werden, praktisch ohne daß die in die Rastrille 17′ einrastenden Kantenbereiche der Klemmfinger 5 beschädigt werden.Dabei wird die stärkere, durch eine größere Zahnhöhe erreichbare Sperrung durch die positive Schräge der Sperrflanke 18 und der ihr gegenüberliegenden Flanke 21 gemindert.

Durch die erfindungsgemäße Ausbildung der Rastzähne 11, 11′ bzw. der Rastrillen 17, 17′ und ihrer Sperrflanken 12 bzw. 18 kann eine Vorrichtung geschaffen werden, mit deren Hilfe - falls erforderlich - praktisch eine echte und auch gegen eine große Krafteinwirkung noch wirksame Sperrung ihrer mit der Schraubhülse 1 verbundenen Überwurfmutter 7 gegen eine Lösebewegung möglich ist.
Gleichzeitig ist es aber auch möglich, über die Form und Höhe der Rastzähne bzw. Rastrillen eine an praktisch alle Anforderungen bei der Herstellung anpaßbare Rastung herzustellen.

Alle vorbeschriebenen oder in den Ansprüchen aufgeführten Einzelmerkmale können einzeln oder in beliebiger Kombination miteinander erfindungswesentlich sein.

## Patentansprüche

1. Vorrichtung zur Halterung und zum Durchführen von Kabeln, Leitungen, Rohren oder Schläuchen, mit einer Schraubhülse (1), welche in axialer Fortsetzung des Gewindebereiches (4) durch Axialschlitze (6) voneinander getrennte Klemmfinger (5) aufweist, die vorzugsweise einstückig an der Schraubhülse (1) angeordnet sind, und mit einer Überwurfmutter (7) mit Durchstecköffnung (8), die in ihrem Inneren eine sich verjüngende, vorzugsweise konische Druckfläche (9) zur Beaufschlagung der Enden der Klemmfinger (5) und zu deren radialer Verformung sowie eine Drehsicherung zum Verrasten mit einem oder mehreren der Klemmfinger (5) hat, **dadurch gekennzeichnet,** daß im Inneren der Überwurfmutter (7) als Drehsicherung wenigstens ein Rastzahn (11, 11′) vorgesehen ist, der über die Druckfläche (9) ragt und eine Sperrflanke (12) zum Einrasten zwischen zwei, durch im Querschnitt schräge Axialschlitze (6) voneinander getrennten Klemmfingern (5) hat, daß diese Sperrflanke (12) schräg zu einem in ihrem Bereich verlaufenden und sie somit schneidenden Radius (13) der Durchstecköffnung (8) angeordnet ist, und daß sie in Gebrauchsstellung zur gleichen Dreh- oder Umfangsrichtung hin wie die Axialschlitze (6) der Schraubhülse (1) schräg verläuft.

2. Vorrichtung nach dem Oberbegriff von Anspruch 1, dadurch gekennzeichnet, daß an der Druckfläche (9) im Inneren der Überwurfmutter (7) als Drehsicherung zumindest eine Rastrille (17, 17′) mit einer Sperrflanke (18) zum Einrasten eines Klemmfingers (5) vorgesehen ist.

3. Vorrichtung nach Anspruch 2, dadurch gekennzeichnet, daß die die Klemmfinger (5) voneinander trennenden Axialschlitze schräg verlaufen, daß die Sperrflanke (18) jeder Rastrille (17, 17′) schräg zu einem in ihrem Bereich verlaufenden und sie somit schneidenden Radius der Durchstecköffnung angeordnet ist, und daß sie (18) in Gebrauchsstellung zur gleichen Dreh- oder Umfangsrichtung hin wie die Axialschlitze (6) der Schraubhülse (1) schräg verläuft.

4. Vorrichtung nach einem oder mehreren der Ansprüche 1 bis 3, dadurch gekennzeichnet, daß die Axialsschlitze (6) der Schraubhülse (1) und die Sperrflanken (12, 18) der an der Überwurfmutter (7) vorgesehenen Rastzähne (11, 11′) oder Rastrillen (17, 17′) in Gebrauchsstellung jeweils etwa denselben Neigungswinkel gegenüber dem sie schneidenden Radius der Durchstecköffnung (8) aufweisen.

5. Vorrichtung nach einem oder mehreren der Ansprüche 1 bis 4, dadurch gekennzeichnet, daß der von der Sperrflanke (12, 18) und dem sie an ihren inneren radialen Ende schneidenden Radius eingeschlossene spitze Winkel von dem spitzen Winkel abweicht, den die Axialschlitze (6) und die sie ebenfalls an ihren inneren radialen Endbereichen schneidenden Radien bei unverformten Klemmfingern (5) einschließen.

6. Vorrichtung nach Anspruch 5, dadurch gekennzeichnet, daß der von der Sperrflanke (12, 18) und dem sie an ihrem inneren radialen Ende schneidenden Radius eingeschlossene Winkel vorzugsweise etwas größer ist als der von den Axialschlitzen (6) und den diese ebenfalls jeweils an ihren inneren radialen Endbereichen schneidenden Radien eingeschlossene Winkel bei unverformten Klemmfingern (5).

7. Vorrichtung nach Anspruch 5, dadurch gekennzeichnet, daß der von der Sperrflanke (12, 18) und dem sie an ihrem inneren radialen Ende schneidenden Radius eingeschlossene Winkel vorzugsweise etwas kleiner ist als der von den Axialschlitzen (6) und den diese ebenfalls jeweils an ihren inneren radialen Endbereichen schneidenden Radien eingeschlossene Winkel bei unverformten Klemmfingern (5).

8. Vorrichtung nach einem oder mehreren der Ansprüche 1 bis 7, dadurch gekennzeichnet, daß mehrere Rastzähne (11, 11′) oder Rastrillen (17, 17′) vorgesehen sind.

9. Vorrichtung nach Anspruch 8, dadurch gekennzeichnet, daß die Sperrflanken (12, 18) der Rastzähne (11, 11′) oder Rastrillen (17, 17′) mit dem sie an ihrem inneren radialen Ende jeweils schneidenden Radius vorzugsweise unterschiedliche Winkel einschließen.

10. Vorrichtung nach einem oder mehreren der Ansprüche 1 bis 9, dadurch gekennzeichnet, daß die Höhe der Sperrflanke (12, 18) sich über deren Länge ändert.

11. Vorrichtung nach einem oder mehreren der Ansprüche 1 bis 10, dadurch gekennzeichnet, daß die Höhe der Sperrflanke (12, 18) vom größeren zum kleineren Durchmesser der Druckfläche (9) hin zunimmt.

12. Vorrichtung nach einem oder mehreren der Ansprüche 1 bis 11, dadurch gekennzeichnet, daß die Sperrflanke (12) der Rastzähne (11) von der Zahnspitze (15) bis zur Zahnbasis eine Hinterschneidung hat.

13. Vorrichtung nach einem oder mehreren der Ansprüche 1 bis 11, dadurch gekennzeichnet, daß die Sperrflanke (12) und die gegenüberliegende Zahnflanke (14) jedes Rastzahnes (11′) von der Zahnbasis zur Zahnspitze (15) hin aufeinander zulaufen.

14. Vorrichtung nach einem oder mehreren der Ansprüche 1 bis 13, dadurch gekennzeichnet, daß die Sperrflanke (18) der Rastrillen (17) von ihrem außenseitigen Längsrand (19) zum Rillengrund (20) hin eine Hinterschneidung bildet.

15. Vorrichtung nach einem oder mehreren der Ansprüche 1 bis 13, dadurch gekennzeichnet, daß die Sperrflanke (18) und die gegenüberliegende Flanke (21) jeder Rastrille (17′) von ihren außenseitigen Längsrändern (19) zum Rillengrund (20) hin aufeinander zulaufen.

16. Vorrichtung nach einem oder mehreren der Ansprüche 1 bis 15, dadurch gekennzeichnet, daß die Schraubhülse (1) und/oder die Überwurfmutter (7) im wesentlichen aus einem elastischen Werkstoff, insbesondere aus Kunststoff bestehen.

## Claims

1. A device for the fixation and through-put of cables, conduits, tubes or hoses, including a screwed sleeve(1) having in axial continuation of the thread area (4) clamping fingers (5) which are separated from one another by axial slits (6) and are preferably arranged on the screwed sleeve (1) in a condition integral therewith, and further including a cap nut (7) with an opening for through-put (8), said cap nut having in its interior a tapering, preferably conical, bearing-surface area (9) for acting upon and radially deforming the ends of the clamping fingers (5), as well as an anti-rotation means for locking with one or more of the clamping fingers (5), **characterized in that** at least one locking tooth (11, 11′) is provided as an anti-rotation means inside the cap nut (7), said locking tooth projecting over the bearing-surface area (9) and having an arresting flank (12) for engaging between two clamping fingers (5) separated from each other by axial slits (6) oblique in cross section, that said arresting flank (12) is arranged obliquely to a line which forms a radius (13) of the opening for through-put (8) and runs in the area of and hence intersects said arresting flank, and that in the position of use said arresting flank runs obliquely towards the same direction of rotation or circumferential direction as the axial slits (6) of the screwed sleeve (1).

2. A device according to the preamble of claim 1, characterized in that at least one locking groove (17,17′) with an arresting flank (18) is provided as an anti-rotation means at the bearing-surface area (9) inside the cap nut (7) and serves for engagement of a clamping finger (5).

3. A device as claimed in claim 2, characterized in that the axial slits separating the clamping fingers (5) from one another run obliquely, that the arresting flank (18) of each locking groove (17, 17′) is arranged obliquely to a line which forms a radius of the opening for through-put and runs in the area of and hence intersects said arresting flank, and that in the position of use said arresting flank (18) runs obliquely towards the same direction of rotation or circumferential direction as the axial slits (6) of the screwed sleeve (1).

4. A device as claimed in one or more of claims 1 to 3, characterized in that in the position of use the axial slits (6) of the screwed sleeve (1) and the arresting flanks (12, 18) of the locking teeth (11, 11′) or locking grooves (17, 17′) provided on the cap nut (7) have in each case approximately the same angle of inclination relative to the radius intersecting them of the opening for through-put (8).

5. A device as claimed in one or more of claims 1 to 4, characterized in that the acute angle included by the arresting flank (12, 18) and by the radius intersecting said flank at the inner radial end thereof differs from the acute angle included by the axial slits (6) and by the radii intersecting said slits likewise at their inner radial end zones when the clamping fingers (5) are undeformed.

6. A device as claimed in claim 5, characterized in that the angle included by the arresting flank (12, 18) and by the radius intersecting said flank at the inner radial end thereof is preferably somewhat larger than the angle included by the axial slits (6) and by the radii intersecting said slits likewise at their inner radial end zones when the clamping fingers (5) are undeformed.

7. A device as claimed in claim 5, characterized in that the angle included by the arresting flank (12, 18) and by the radius intersecting said flank at the inner radial end thereof is preferably somewhat smaller than the angle included by the axial slits (6) and by the radii intersecting said slits likewise at their inner radial end zones when the clamping fingers (5) are undeformed.

8. A device as claimed in one or more of claims 1 to 7, characterized in that a plurality of locking teeth (11,11′) or locking grooves (17, 17′) are provided.

9. A device as claimed in claim 8, characterized in that the arresting flanks (12, 18) of the locking teeth (11, 11′) or locking grooves (17, 17′) preferably include different angles with the radius intersecting said flanks at their inner radial end.

10. A device as claimed in one or more of claims 1 to 9, characterized in that the height of the arresting flank (12, 18) varies over the length thereof.

11. A device as claimed in one or more of claims 1 to 10, characterized in that the height of the arresting flank (12, 18) increases from the larger to the smaller diameter of the bearing-surface area (9).

12. A device as claimed in one or more of claims 1 to 11, characterized in that the arresting flank (12) of the locking teeth (11) has an undercut from the tooth tip (15) to the tooth base.

13. A device as claimed in any one or more of claims 1 to 11, characterized in that the arresting flank (12) and the opposite tooth face (14) of each locking tooth (11′) converge from the tooth base towards the tooth tip (15).

14. A device as claimed in one or more of claims 1 to 13, characterized in that the arresting flank (18) of the locking grooves (17) forms an undercut from its external longitudinal edge (19) towards the groove base (20).

15. A device as claimed in one or more of claims 1 to 13, characterized in that the arresting flank (18) and the opposite face (21) of each locking groove (17′) converge from their external longitudinal edges (19) towards the groove base (20).

16. A device as claimed in one or more of claims 1 to 15, characterized in that the screwed sleeve (1) and/or the cap nut (7) consist essentially of an elastic material, particularly of plastics.

## Revendications

1. Dispositif pour le maintien et la traversée de câbles, de conduites, de tubes ou de tuyaux, comprenant un manchon fileté (1), lequel comporte, dans le prolongement de la zone filetée (4) dans le sens axial, des doigts de serrage (5) qui sont séparés les uns des autres par des fentes axiales (6) et qui sont de préférence disposés d'un seul tenant sur le manchon fileté (1), et comprenant un écrou de recouvrement (7) qui est pourvu d'une ouverture de passage (8) et qui comporte intérieurement une surface de pression (9) rétrécie, de préférence conique, destinée à agir sur les extrémités des doigts de serrage (5) et à les déformer radialement, ainsi qu'un dispositif de blocage en rotation destiné à s'encliqueter sur un ou plusieurs des doigts de serrage (5), caractérisé par le fait qu'il est prévu à l'intérieur de l'écrou de recouvrement (7), comme dispositif de blocage en rotation, au moins une dent d'encliquetage (11, 11′) qui fait saillie au-delà de la surface de pression (9) et qui comporte un flanc de blocage (12) destiné à s'encliqueter entre deux doigts de serrage (5), ceux-ci étant séparés les uns des autres par des fentes axiales (6) qui sont obliques en section transversale, par le fait que ce flanc de blocage (12) est disposé obliquement par rapport à un rayon (13) de l'ouverture de passage (8) qui s'étend dans sa région et qui le recoupe donc, et par le fait que, dans la position d'utilisation, il s'étend obliquement vers la même direction en rotation ou périphérique que les fentes axiales (6) du manchon fileté (1).

2. Dispositif selon le préambule de la revendication 1, caractérisé par le fait que, comme dispositif de blocage en rotation, il est prévu sur la surface de pression (9), à l'intérieur de l'écrou de recouvrement (7), au moins une rainure d'encliquetage (17, 17′) munie d'un flanc de blocage (18) qui est destiné à s'encliqueter sur le doigt de serrage (5).

3. Dispositif selon la revendication 2, caractérisé par le fait que les fentes axiales qui séparent les uns des autres les doigts de serrage (5) s'étendent obliquement, par le fait que le flanc de blocage (18) de chaque rainure d'encliquetage (17, 17′) est disposé obliquement par rapport à un rayon de l'ouverture de passage qui s'étend dans sa région et qui le recoupe donc, et par le fait que, dans la position d'utilisation, il (18) s'étend obliquement vers la même direction en rotation ou périphérique que les fentes axiales (6) du manchon fileté (1).

4. Dispositif selon l'une ou plusieurs des revendication 1 à 3, caractérisé par le fait que, dans la position d'utilisation, les fentes axiales (6) du manchon fileté (1) et les flancs de blocage (12, 18) des dents d'encliquetage (11, 11′) ou des rainures d'encliquetage (17, 17′) qui sont prévues sur l'écrou de recouvrement (7) présentent à chaque fois un angle d'inclination à peu près égal par rapport au rayon de l'ouverture de passage (8) qui les recoupe.

5. Dispositif selon l'une ou plusieurs des revendication 1 à 4, caractérisé par le fait que l'angle aigu compris entre le flanc de blocage (12, 18) et le rayon qui le recoupe à son extrémité située à l'intérieur dans le sens radial est différent de l'angle aigu compris entre les fentes axiales (6) et les rayons qui les recoupent également dans leurs régions d'extrémité situées à l'intérieur dans le sens radial lorsque les doigts de serrage (5) ne sont pas déformés.

6. Dispositif selon la revendication 5, caractérisé par le fait que l'angle compris entre le flanc de blocage (12, 18) et le rayon qui le recoupe à son extrémité située à l'intérieur dans le sens radial est de préférence légèrement supérieur à l'angle compris entre les fentes axiales (6) et les rayons qui les recoupent également à chaque fois dans leurs régions d'extrémité situées à l'intérieur dans le sens radial lorsque les doigts de serrage (5) ne sont pas déformés.

7. Dispositif selon la revendication 5, caractérisé par le fait que l'angle compris entre le flanc de blocage (12, 18) et le rayon qui le recoupe à son extrémité située à l'intérieur dans le sens radial est de préférence légèrement inférieur à l'angle compris entre les fentes axiales (6) et les rayons qui les recoupent également à chaque fois dans leurs régions d'extrémité situées à l'intérieur dans le sens radial lorsque les doigts de serrage (5) ne sont pas déformés.

8. Dispositif selon l'une ou plusieurs des revendication 1 à 7, caractérisé par le fait qu'il est prévu une pluralité de dents d'encliquetage (11, 11′) ou de rainures d'encliquetage (17, 17′).

9. Dispositif selon la revendication 8, caractérisé par le fait que les flancs de blocage (12, 18) des dents d'encliquetage (11, 11′) ou des rainures d'encliquetage (17, 17′) forment de préférence des angles différents avec le rayon qui les recoupe à chaque fois à leur extrémité située à l'intérieur dans le sens radial.

10. Dispositif selon l'une ou plusieurs des revendication 1 à 9, caractérisé par le fait que la hauteur du flanc de blocage (12, 18) varie sur sa longueur.

11. Dispositif selon l'une ou plusieurs des revendication 1 à 10, caractérisé par le fait que la hauteur du flanc de blocage (12, 18) augmente du plus grand au plus petit diamètre de la surface de pression (9).

12. Dispositif selon l'une ou plusieurs des revendication 1 à 11, caractérisé par le fait que le flanc de blocage (12) des dents d'encliquetage (11) présente une contre-dépouille depuis la pointe (15) de la dent jusqu'à la base de la dent.

13. Dispositif selon l'une ou plusieurs des revendication 1 à 11, caractérisé par le fait que le flanc de blocage (12) et le flanc de dent opposé (14) de chaque dent d'encliquetage (11′) convergent l'un vers l'autre de la base de la dent vers la pointe (15) de la dent.

14. Dispositif selon l'une ou plusieurs des revendication 1 à 13, caractérisé par le fait que le flanc de blocage (18) des rainures d'encliquetage (17) présente une contre-dépouille de leurs bords longitudinaux extérieurs (19) vers le fond (20) de la rainure.

15. Dispositif selon l'une ou plusieurs des revendication 1 à 13, caractérisé par le fait que le flanc de blocage (18) et le flanc opposé (21) de chaque rainure d'encliquetage (17′) convergent l'un vers l'autre de leurs bords longitudinaux extérieurs (19) vers le fond (20) de la rainure.

16. Dispositif selon l'une ou plusieurs des revendication 1 à 15, caractérisé par le fait que le manchon fileté (1) et/ou l'écrou de recouvrement (7) sont constitués, pour l'essentiel, par une matière élastique, et en particulier par de la manière plastique.
